Europäisches Patentamt

(19) European Patent Office

Office européen des brevets

(11) Publication number: **0 178 934
B1**

(12) **EUROPEAN PATENT SPECIFICATION**

(45) Date of publication of patent specification: **29.03.89**

(21) Application number: **85307505.9**

(22) Date of filing: **17.10.85**

(51) Int. Cl.⁴: **B 60 K 5/12, F 16 F 13/00,
F 16 F 15/00**

(54) A mounting arrangement for a vehicle engine.

(30) Priority: **19.10.84 GB 8426457**

(43) Date of publication of application:
**23.04.86 Bulletin 86/17**

(45) Publication of the grant of the patent:
**29.03.89 Bulletin 89/13**

(84) Designated Contracting States:
**DE FR GB IT NL SE**

(56) References cited:
  **DE-A-2 821 493
  DE-A-2 946 516
  DE-A-3 509 000
  FR-A-1 008 798
  GB-A-1 473 750
  GB-A-1 509 940
  US-A-3 202 388**

(73) Proprietor: **BTR plc
Silvertown House Vincent Square
London SW1P 2PL (GB)**

(72) Inventor: **Best, Anthony
Vale Cottage Coulston
Westbury Wilts (GB)**
Inventor: **Hunt, Kenneth Vivian
8 Hampton Close Bowerhill
Melksham Wilts (GB)**
Inventor: **Hoole, Raymond
306 Frome Road Trowbridge
Wilts (GB)**

(74) Representative: **Hinton, Alan Horace et al
BTR Group Patent & Trade Mark Service P O Box 504
Erdington Birmigham B24 9QH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a mounting arrangement for a vehicle engine.

Conventionally, vehicle engines are mounted on the body of the vehicle which is itself supported by suspension units on the wheels of the vehicle. The body thus experiences not only vibrations from the engine through the engine mounts but also shocks from the road through the suspension units. At certain frequencies, typically between 5 and 15 Hz, the body and engine can oscillate out of phase, causing uncomfortable vibrations in the vertical direction which are sometimes known as "shake". Engine mounts with higher stiffness or more damping can reduce the problem of shake, but at the expense of noise isolation. Conventional engine mounting arrangements therefore have values of stiffness and damping which represent a compromise between shake and noise problems.

The present invention is based upon an appreciation of the idea of coupling together the engine and body mounts of a vehicle so that the body and engine are encouraged to move in phase. One approach corresponding to the mounting arrangement according to the preamble of Claim 1, made in Peugoet British Patents Nos. 1473750 and 1509940, proposes the introduction of an incompressible fluid communication between the body and engine mounts. The use of an incompressible fluid as a link between the amounts in this Peugeot system acts effectively like a positive mechanical connection between the mounts i.e. a displacement of one mount produces a corresponding displacement in the other mount.

The present invention offers a mounting arrangement which is aimed at reducing "shake" whilst providing good noise isolation and which uses a completely different concept.

According to the invention there is provided a mounting arrangement for a vehicle engine of the kind comprising means for mounting the engine of the vehicle to the body of the vehicle, which mounting means comprises a first fluid-tight chamber of variable volume which contains fluid and which is arranged between the engine and the body so that the weight of the engine tends to reduce the volume of the chamber, means for supporting the body on the suspension system of the vehicle, which supporting means includes a second fluid-tight chamber of variable volume, which chamber contains fluid and is arranged so that the load of the body on the suspension system tends to reduce the volume of the chamber, and a fluid communication between the first and second chambers, characterised in that the fluid is a gas and relative movement between the engine and body or between the body and suspension system alters the pressure of the gas in one of the chambers, which change in gas pressure is communicated to the other of the chambers, the arrangement acting to tend to bring into phase the vibrational movements of the body and engine, the effective pressurised areas (as herein defined) of the mounting means and supporting means being approximately equal and the natural frequency of vibration of the body on the supporting means without the second chamber being approximately equal to the natural frequency of vibration of the engine on the effective gas spring (as herein defined).

The effective pressurised areas of the mounting and supporting means are defined as being equal if a given pressure in the mounting means produces between the engine and body the same force as is produced between the body and suspension system by the same given pressure in the suspension means.

The effective gas spring is defined as an equivalent spring which has the same effective stiffness at the mounting means as the gas contained in the first chamber in gas communication with the second chamber but with no relative movement between the body and suspension system.

By way of example, an embodiment of the invention will now be described with reference to the accompanying drawings, in which:—

Figure 1 is a diagrammatic representation of a vehicle engine mounting arrangement according to the invention,

Figure 2 is a diagram of an equivalent theoretical linear model which can be used for mathematical analysis,

Figure 3 is a further developed mathematical model,

Figure 4 is a graph of body acceleration against frequency,

Figure 5 is an alternative body mount, and

Figures 6a and 6b show an alternative engine mount.

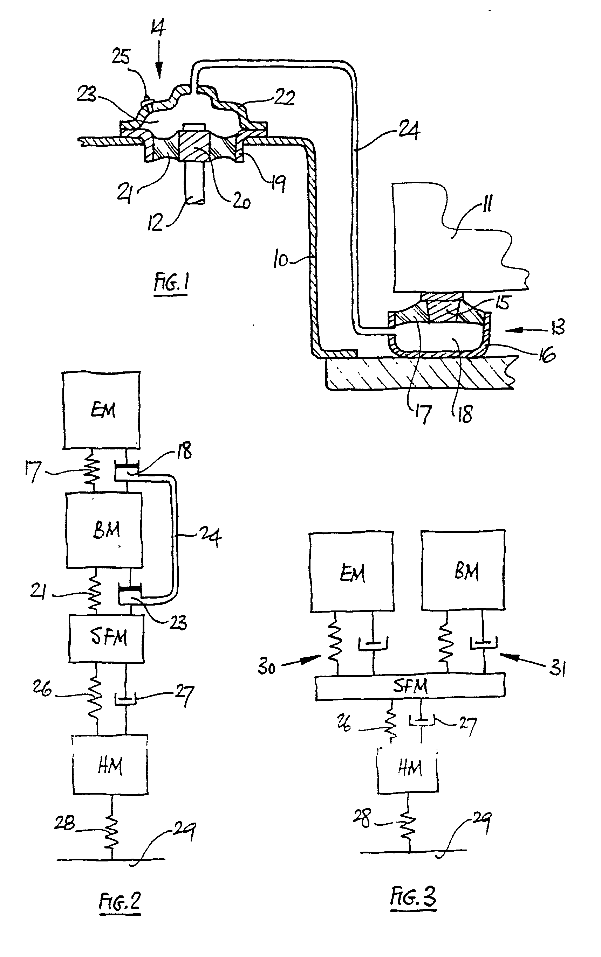

In Figure 1, 10 represents the body of a vehicle, 11 is the engine and 12 is one of the suspension units, in this case a Macpherson-type strut, supporting the body on the vehicle wheels. 13 is one of the engine mounts connected between the engine 11 and the body 10, and 14 is one of the body mounts connecting the body to the wheels of the vehicle via the suspension unit 12.

The engine mount 13 includes upper and lower connectors 15 and 16 which are attached to the engine 11 and body 10 respectively and which are themselves connected together by means of a flexible (e.g. elastomeric) annulus 17. Defined within the engine mount 13 is a gas-tight chamber 18.

The body mount 14 includes outer and inner connectors 19 and 20 which are attached to the body 10 and suspension unit 12 respectively and which are themselves connected together by means of a flexible (e.g. elastomeric) annulus 21. The mount 14 further includes a cap 22 which defines a gas-tight chamber 23 over the flexible annulus 21. The chambers 23 and 18 are in open communication with each other through a pipe 24, and both chambers contain gas, conveniently air, under pressure. The gas in the chambers can be pressurised by means of a valve 25.

The engine mount 13 and body mount 14 are designed with their effective pressurised areas approximately equal so that the engine 11 is effectively supported directly on to the suspension unit 12. Thus, it will be seen that a downward force from the engine 11, tending to compress the engine mount 13, will cause an increase in the gas pressure inside the chamber 18. This will give rise to an equal increase in pressure in the chamber 23, via the pipe connection 24. Because the effective pressurised areas of the two mounts 13 and 14 are approximately equal, this means that the force from the engine 11 acting on the engine mount 13 will be balanced by an equal and opposite force from the suspension unit 12 acting on the body mount 14. It will be seen that, whereas in a conventional arrangement the body mount has to support not only the body but the engine as well, in the gas coupled engine mounting arrangement as described the engine is effectively supported by the suspension so that the body mount supports only the body.

The above described gas coupled engine mounting arrangement can be represented in an idealised way by a linear thoretical model as shown in Figure 2. In Figure 2 the mounting arrangement of Figure 1 is represented by masses $EM$, $BM$, $SFM$ and $HM$, springs 17, 21, 26 and 28 and piston and cylinder devices 18 and 23. Numbered items in Figure 2 represent identically numbered items in Figure 1. $EM$, $BM$, $SFM$ and $HM$ represent respectively the masses of the engine 11 (that part which bears on an engine mount 13), the vehicle body 10 (that part which bears on a suspension unit 12), the upper part of a suspension unit 12 and a wheel hub. 26 represents the main spring of a suspension unit 12, 27 is a dashpot representing the damper of the suspension unit 12, 28 represents the tyre and 29 the road surface. Piston and cylinder devices 18, 23 and pipe 24 represent the gas coupling system. Piston and cylinder devices 18, 23 each have areas equal to the effective piston areas of the engine mount 13 and body mount 14 respectively. 17 represents the spring stiffness of the flexible annulus of the engine mount 13 and 21 represents the spring stiffness of the flexible annulus of the body mount 14. The "subframe" mass $SFM$ is made up of member 20 of the body mount 14 and the upper part of the suspension unit 12 to which it is connected.

It will be noted that Figure 2 without the gas coupling system would represent a conventional vehicle engine mounting arrangement where the engine 11 is mounted simply by mounting 17 on to the body 10.

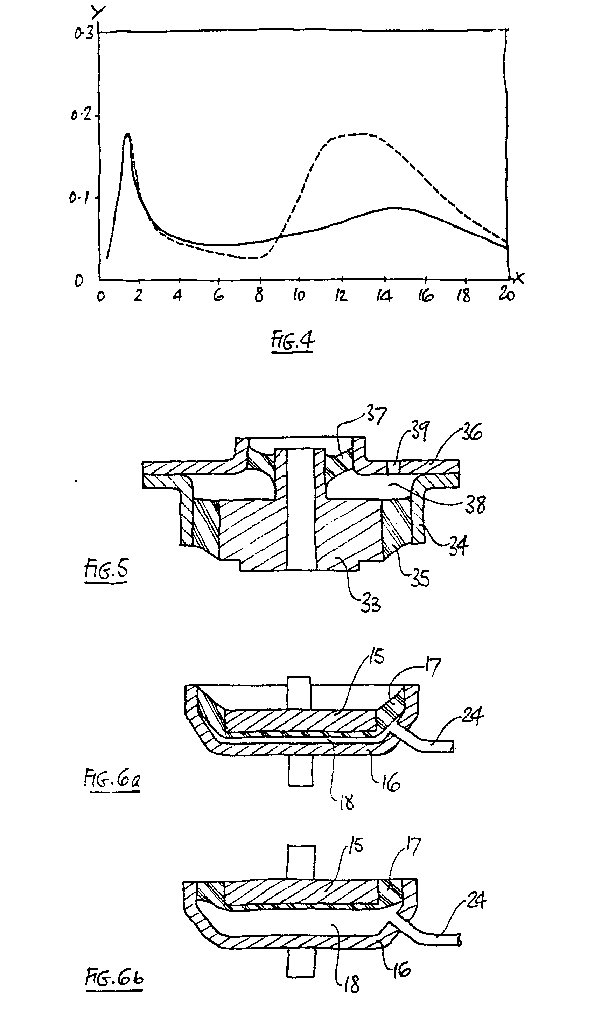

The uncomfortable vibrational effect known as "shake" is represented in the linear model by the peak acceleration of the mass $BM$ resulting from a sinusoidal vibration of the road surface 29. Mathematical analysis of the linear models with and without the gas coupling system, each using typical values of the variables depicted, show that significant reduction in "shake" can be achieved with the gas coupled system compared with the conventional arrangement. Typical results obtained from such analysis are shown graphically in Figure 4. In Figure 4, the X axis measures frequency in Hz and the Y axis measures body acceleration in fractions of "g" (rms). The dotted line graph shows the performance of a conventional mounting arrangement and the full line graph shows the performance of the gas linked system. Clearly, the shake which occurs with the conventional system at around 12 Hz is significantly less in the gas coupled system.

For the gas coupled system to be effective in reducing shake, the effective piston area of the engine mounting must be approximately equal to the effective piston area of the body mounting. Also, the natural frequency of vibration of the effective body mass $BM$ on spring 21 alone must be approximately equal to the natural frequency of vibration of the effective engine mass $EM$ on the effective stiffness of the gas contained in 18 in the engine mount in open communication (via pipe 24) with the gas contained in 23 in the body mount. A gas coupled system which meets these criteria is referred to herein as a tuned system and the natural frequency of vibration discussed above is referred to herein as the tuning frequency. Figure 3 represents a mathematical model of a mechanical equivalent of Figure 2 for a tuned system where the engine and body are both at the tuning frequency.

In Figure 3, 31, which supports the body mass $BM$, represents the flexible annulus 21 of Figures 1 and 2, and 30 which supports the engine mass $EM$, represents the effective gas spring comprising 18, 23 and 24. Vertical vibration from the road 29 causes vertical vibration of the subframe mass $SFM$, which in turn causes vertical vibration of the engine and body masses $EM$ and $BM$, on their respective supporting springs 30 and 31. As can be seen from Figure 3, if the natural frequencies of the engine and body masses $EM$ and $BM$ on their respective springs 30 and 31 are equal, the vibrational movement of the engine and body masses will be in phase. Mathematical analysis of Figure 3 shows that the the body acceleration resulting from sinusoidal road vibration is similar to that shown by the full line graph in Figure 4.

It will be seen with reference to Figures 2 and 3 that static and dynamic forces due to engine weight and engine mass are transmitted via the gas coupling system directly to the "subframe" which is at the top of the suspension spring 26, bypassing the body spring 21. The body spring 21 in a gas coupled system is therefore subjected to much lower forces than in a conventional mounting arrangement which means that the body spring can be of much lower spring stiffness. This lower spring stiffness of the body spring 21 has the beneficial effect of reducing transmission of road noise through to the vehicle body.

In practice, in the gas coupled system shown in Figure 1, it is necessary for the gas pressure to be in excess of atmospheric (typically 2 to 4 bar) in order to obtain a high enough tuning frequency (typically 5 to 8 Hz). To achieve this, the engine mount static stiffness (17 in Figure 2) should be as high as possible to limit static deflection of the engine mount upwards due to the gas pressure. However, it is also desirable for the engine mount dynamic stiffness to be as low as possible to minimise the effects of imperfections in the tuning of the practical system. Such an engine mount having these desired characteristics is described below.

A feature of the gas coupled system is that the gas under pressure contributes significantly to the total stiffness of the engine and body mounts and therefore an economical mounting system results, particularly if the gas used is air.

In practice, the effective height of the gas chamber in the engine mount should be as high as possible compared with the height of the gas chamber in the body mount in order to provide good high frequency performance above the frequency at which shake occurs.

Mathematical analysis based on the models of Figures 2 and 3 indicates that optimum system performance at shake frequencies is obtained with a particular amount of damping in the interconnecting gas pipe 24. This can be achieved conveniently by a localised restriction or reduction in diameter in the pipe.

Figure 5 shows an alternative body mount to that shown in Figure 1. The body mount in Figure 4 is a self contained sealed unit. The suspension unit is fixed to an inner connector 33, and the mount is fixed to the body of the vehicle via an outer connector 34. A flexible (e.g. elastomeric) annulus 35 connects together the inner and outer connectors 33 and 34. A cap 36 is sealingly connected to the outer connector 34, and a further flexible (e.g. elastomeric) annulus 37 is connected between the cap and the inner connector 33, defining a gas-tight chamber 38. The chamber 38 is able to be put in communication with the gas-tight chamber in the engine mount via a hole 39, and suitable means is provided for pressurising the gas. As in the Figure 1 body mount, it will be seen that the volume of the chamber 38 alters as there is relative movement in the inner and outer connectors 33 and 34, and hence there is variation in the gas pressure link with the engine mount. Such a gas coupled body mount, sealed to make it gas-tight, can be assembled easily on to a vehicle, the top of the suspension unit rod protruding through the inner connector 33 from beneath and being accessible from above for securing with a nut, the mount being thus assembled onto the vehicle without disturbing the gas seal.

Figure 6a shows a development of the engine mount shown in Figure 1, and as the features of the mount are essentially the same as those of Figure 1, a description need not be repeated. Corresponding elements of the mounts have been given similar reference numerals. The engine mount is shown in Figure 6a in its preinstallation condition i.e. when it is not supporting an engine and chamber 18 does not contain gas under pressure. Figure 6b shows the mount in its working condition supporting an engine in static equilibrium. Here the gas in the chamber 18 has been pressurised to, typically, 2 to 4 bar and the flexible annulus 17 is approaching its position of axial instability. This is due to a change from the pre-installed position of the annulus in Figure 6a to the highly radially compressed state of the annulus in Figure 6b. In such a condition of near axial instability in Figure 6b the dynamic axial stiffness of the mount will be reduced and may be lower than the overall static axial stiffness. The desired requirements for a practical system of high static stiffness and a low dynamic stiffness, as mentioned above, is thus achieved.

Although the above described embodiments are for vehicles having Macpherson-type suspension units, it will be appreciated that the engine mounting arrangement according to the invention could be used with other suspension types. The preferred arrangement for a vehicle is for there to be a pair of engine mounts as described above each associated with a respective suspension unit but it will be appreciated that other combinations and numbers of engine mounts could be used.

**Claims**

1. A mounting arrangement for a vehicle engine of the kind comprising means (13) for mounting the engine (11) of the vehicle to the body (10) of the vehicle, which mounting means comprises a first fluid-tight chamber (18) of variable volume which contains fluid and which is arranged between the engine and the body so that the weight of the engine tends to reduce the volume of the chamber, means (14) for supporting the body on the suspension system (12) of the vehicle, which supporting means includes a second fluid-tight chamber (23) of variable volume, which chamber contains fluid and is arranged so that the load of the body on the suspension system tends to reduce the volume of the chamber, and a fluid communication (24) between the first and second chambers, characterised in that the fluid is a gas and relative movement between the engine (11) and body (10) or between the body (10) and suspension system (12) alters the pressure of the gas in one of the chambers (18, 23), which change in gas pressure is communicated to the other of the chambers (18, 23), the arrangement acting to tend to bring into phase the vibrational movements of the body and engine, the effective pressurised areas of the fluid-tight chambers of the mounting means (13) and supporting means (14) being approximately equal and the natural frequency of vibration of the body on the supporting means without the second chamber being approximately equal to the natural frequency of vibration of the engine on the effective gas spring.

2. A mounting arrangement as claimed in Claim 1 wherein the gas pressure is greater than atmospheric.

3. A mounting arrangement as claimed in Claim 1 or Claim 2 wherein the height of the first chamber (18) is greater than the height of the second chamber (23).

4. A mounting arrangement as claimed in any preceding claim wherein the gas communication (24) between the two chambers includes restricting means for damping the flow of gas therethrough.

5. A mounting arrangement as claimed in any preceding claim wherein the mounting means (13) comprises a flexible resilient member (17) connected between the body (10) and the engine (11).

6. A mounting arrangement as claimed in claim 5 wherein when the first chamber (18) contains gas under pressure, the gas provides a substantial part of the total stiffness of the mounting means (13).

7. A mounting arrangement as claimed in claim 5 or claim 6 wherein when the first chamber (18) contains gas under pressure and the engine (11) and body (10) are in static equilibrium, the dynamic stiffness of the mounting means (13) is low compared with its static stiffness.

8. A mounting arrangement as claimed in any preceding claim wherein the supporting means (14) comprises an element (21) of flexible resilient material connected between the body (10) and the suspension system (12).

9. A mounting arrangement as claimed in claim 8 wherein the second chamber (23) is bounded in part by the said element (21).

10. A mounting arrangement as claimed in claim 8 or claim 9 wherein the supporting means (14) comprises a second element (37) of flexible resilient material connected between the body (10) and the suspension system (12).

11. A mounting arrangement as claimed in claim 10 wherein the second chamber (38) is bounded in part by the said second element (37).

12. A mounting arrangement as claimed in any of the preceding claims wherein a pair of engine mounting means (13) is provided, each engine mounting means being associated with a respective body supporting means (14).

**Patentansprüche**

1. Befestigungsanordnung für einen Fahrzeugmotor mit Mittel (13) zum Befestigen des Motors (11) des Fahrzeugs an der Karosserie (10) des Fahrzeuges, welches Befestigungsmittel eine erste fluiddichte Kammer (18) variablen Volumens umfaßt, die Fluid enthält und zwischen dem Motor und der Karosserie so angeordnet ist, daß das Gewicht des Motors das Volumen der Kammer zu reduzieren trachtet, mit Mittel (14) zum Abstützen der Karosserie an dem Federungssystem (12) des Fahrzeuges, welches Abstützmittel eine zweite fluiddichte Kammer (23) variablen Volumens einschließt, die Fluid enthält und so angeordnet ist, daß die auf das Federungssystem wirkende Last der Karosserie das Volumen der Kammer zu reduzieren trachtet, und mit einer Fluidverbindung (24) zwischen der ersten und der zweiten Kammer, dadurch gekennzeichnet, daß das Fluid ein Gas ist und Relativbewegung zwischen dem Motor (11) und der Karosserie (10) oder zwischen der Karosserie (10) und dem Federungssystem (12) den Druck des Gases in einer Kammer (18, 23) ändert, welche Gasdruckänderung der anderen Kammer (18, 23) durch die Verbindung mitgeteilt wird, wobei die Anordnung dahin wirkt, die Vibrationsbewegungen der Karosserie und des Motors in Phase zu bringen zu trachten, die effektiven unter Druck gesetzten Flächen der fluiddichten Kammern des Befestigungsmittels (13) und des Abstützmittels (14) annähernd gleich sind und die Eigenvibrationsfrequenz der Karosserie an dem Abstützmittel ohne die zweite Kammer annähernd gleich der Eigenvibrationsfrequenz des Motors an der effektiven Gasfeder ist.

2. Befestigungsanordnung nach Anspruch 1, bei der der Gasdruck größer als der Umgebungsdruck ist.

3. Befestigungsanordnung nach Anspruch 1 oder 2, bei der die Höhe der ersten Kammer (18) größer als die Höhe der zweiten Kammer (23) ist.

4. Befestigungsanordnung nach einem der vorangehenden Ansprüche, bei der die Gasverbindung (24) zwischen den beiden Kammern Verengungsmittel zum Dämpfen der Strömung des Gases durch sie enthält.

5. Befestigungsanordnung nach einem der vorangehenden Ansprüche, bei der das Befestigungsmittel (13) ein flexibles, elastisches, zwischen der Karosserie (10) und dem Motor (11) verbindend eingesetztes Element (17) umfaßt.

6. Befestigungsanordnung nach Anspruch 5, bei der die erste Kammer (18) unter Druck stehendes Gas enthält, das einen wesentlichen Teil der Gesamtsteifigkeit des Befestigungsmittels (13) schafft.

7. Befestigungsanordnung nach Anspruch 5 oder 6, bei der, wenn die erste Kammer (18) unter Druck stehendes Gas enthält und der Motor (11) und die Karosserie (10) in statischem Gleichgewicht sind, die dynamische Steifigkeit des Befestigungsmittel (13) im Vergleich zu seiner statischen Steifigkeit niedrig ist.

8. Befestigungsanordnung nach einem der vorangehenden Ansprüche, bei der das Abstützmittel (14) ein Element (21) von flexiblem elastischen Material umfaßt, das zwischen der Karosserie (10) und dem Federungssystem (12) verbindend eingesetzt ist.

9. Befestigungsanordnung nach Anspruch 8, bei der die zweite Kammer (23) teilweise durch das Element (21) begrenzt ist.

10. Befestigungsanordnung nach Anspruch 8 oder 9, bei der das Abstützmittel (14) ein zweites Element (37) von flexiblem elastischen Material umfaßt, das zwischen der Karosserie (10) und dem Federungssystem (12) verbindend eingesetzt ist.

11. Befestigungsanordnung nach Anspruch 10, bei der die zweite Kammer (38) teilweise durch das zweite Element (37) begrenzt ist.

12. Befestigungsanordnung nach einem der vorangehenden Ansprüche, bei der ein Paar von Motorbefestigungsmitteln (13) vorgesehen ist, wobei jedes Motorbefestigungsmittel einem jeweiligen Karosserie-Abstützmittel (14) zugeordnet ist.

## Revendications

1. Un dispositif de montage d'un moteur sur un véhicule, du type comprenant un moyen (13) pour le montage du moteur (11) du véhicule sur le châssis (10) de ce dernier, ledit moyen de montage comprenant une première chambre étanche au fluide (18) d'un volume variable, qui contient un fluide et qui est disposée entre le moteur et le châssis de telle sorte que le poids du moteur ait tendance à réduire le volume de la chambre, un moyen (14) de support du châssis sur le système de suspension (12) du véhicule, ledit moyen de support comprenant une seconde chambre étanche au fluide (23) d'un volume variable, cette chambre contenant un fluide et étant agencée de telle sorte que la charge du châssis sur le système de suspension ait tendance à réduire le volume de la chambre, ainsi qu'une communication fluidique (24) entre la première et la seconde chambre, caractérisé en ce que le fluide est un gaz et un mouvement relatif entre le moteur (11) et le châssis (10) ou bien entre le châssis (10) et le système de suspension (12) modifie la pression du gaz dans une des chambres (18, 23), cette variation de pression de gaz est communiquée à l'autre chambre (18, 23), le dispositif agissant en ayant tendance à mettre en phase les mouvements de vibration du châssis et du moteur, les zones effectives en pression des chambres étanches au fluide du moyen de montage (13) et du moyen de support (14) étant approximativement égales et la fréquence naturelle de vibration du châssis sur le moyen de support sans la chambre secondaire étant approximativement égale à la fréquence naturelle de vibration du moteur sur le ressort à gaz effectif.

2. Un dispositif de montage tel que revendiqué dans la revendication 1, dans lequel la pression de gaz est supérieure à la pression atmosphérique.

3. Un dispositif de montage tel que revendiqué dans la revendication 1 ou la revendication 2, dans lequel la hauteur de la première chambre (18) est supérieure à la hauteur de la seconde chambre (23).

4. Un dispositif de montage tel que revendiqué dans une quelconque des revendications précédentes, dans lequel la communication de gaz (24) entre les deux chambres comprend un moyen d'étranglement pour réduire l'écoulement de gaz la traversant.

5. Un dispositif de montage tel que revendiqué dans une quelconque des revendications précédentes, dans lequel le moyen de montage (13) comprend un élément élastique flexible (17) monté entre le châssis (10) et le moteur (11).

6. Un dispositif de montage tel que revendiqué dans la revendication 5, dans lequel, quand la première chambre (18) contient un gaz sous pression, ce gaz produit une partie substantielle de la raideur totale du moyen de montage (13).

7. Un dispositif de montage tel que revendiqué dans la revendication 5 ou la revendication 6, dans lequel, quand la première chambre (18) contient un gaz sous pression et quand le moteur (11) et le châssis (10) sont en équilibre statique, la raideur dynamique du moyen de montage (13) est faible par comparaison à sa raideur statique.

8. Un dispositif de montage tel que revendiqué dans une quelconque des revendications précédentes, dans lequel le moyen de support (14) comprend un organe (21) formé d'une matière élastique et flexible, qui est monté entre le châssis (10) et le système de suspension (12).

9. Un dispositif de montage tel que revendiqué dans la revendication 8, dans lequel la seconde chambre (23) est délimitée en partie par ledit organe (21).

10. Un dispositif de montage tel que revendiqué dans la revendication 8 ou la revendication 9, dans lequel le moyen de support (14) comprend un second organe (37) formé d'un matériau élastique et flexible et monté entre le châssis (10) et le système de suspension (12).

11. Un dispositif de montage tel que revendiqué dans la revendication 10, dans lequel la seconde chambre (38) est délimitée en partie par ledit second organe (37).

12. Un dispositif de montage tel que revendiqué dans une quelconque des revendications précédentes, dans lequel il est prévu deux moyens de montage de moteur (13), chaque moyen de montage de moteur étant associé à un moyen de support de châssis respectif (14).

FIG. 1

FIG. 2

FIG. 3

FIG.4

FIG.5

FIG.6a

FIG.6b